# EUROPÄISCHE PATENTSCHRIFT

(11) **EP 1 897 998 B1**
(45) Veröffentlichungstag und Bekanntmachung des Hinweises auf die Patenterteilung: **31.03.2010**
(21) Anmeldenummer: 07016274.8
(22) Anmeldetag: 20.08.2007
(51) Int. Cl.: E01C 19/38

(54) **Transportvorrichtung für einen Vibrationsstampfer**
Trolley for a vibration tamper
Chariot de transport pour un vibrateur

(30) Priorität: 07.09.2006 DE 202006013718 U
(43) Veröffentlichungstag der Anmeldung: 12.03.2008
(73) Patentinhaber: BOMAG GmbH, D-56154 Boppard (DE)
(72) Erfinder: Zimmermann, Rainer, 56348 Bornich (DE); Nick, Heinz, 56281 Emmelshausen (DE)
(74) Vertreter: Lang, Friedrich

(56) Entgegenhaltungen:
- DE-A1-102004 048 459
- DE-U1- 29 707 017
- DE-U1- 29 804 993

## Beschreibung

Die Erfindung betrifft eine Transportvorrichtung zum Transportieren eines Vibrationsstampfers, wobei die Transportvorrichtung eine Achse aufweist, an deren Enden jeweils ein Rad angeordnet ist.

Ein gattungsgemäßer Vibrationsstampfer wird üblicherweise zur Bodenverdichtung verwendet und ist beispielsweise aus der DE 201 05 768 U1 bekannt. Ein solcher Vibrationsstampfer weist einen Stampferkopf auf, der einen Antriebsmotor trägt. Nach unten schließt sich über einen elastischen Balg und eine nicht sichtbare Pleuelstange der Stampffuß an den Stampferkopf an. Der Vibrationsstampfer führt durch einen eingebauten Antrieb im Wesentlichen vertikale Vibrationen aus und weist zur Führung einen am Stampferkopf angeordneten Führungsbügel auf, durch den die Führung des Vibrationsstampfers von einer Bedienungsperson ermöglicht wird. Das Gewicht eines solchen Vibrationsstampfers liegt regelmäßig in einem Bereich zwischen 40 bis 90 kg, wobei dieser Bereich zum Teil zu beiden Seiten auch überschritten werden kann. Die sperrige Erscheinung und das hohe Gewicht eines Vibrationsstampfers stellen die Bedienperson insbesondere in unebenem Baustellengelände vor ein Transportproblem. Ein Hin- und Hertragen des Vibrationsstampfers ist mit einem erheblichen körperlichen Einsatz verbunden, so dass hier eine Nachfrage nach alternativen Transportmöglichkeiten besteht.

In diesem Zusammenhang ist es beispielsweise aus DE 297 07 017 U1, den Stampfer zusätzlich mit einem permanenten einachsigen Fahrwerk zu versehen, welches den Vibrationsstampfer zusätzlich abstützt. An dieser Ausführungsform ist allerdings der aufwendige Aufbau, der hohe Platzbedarf, was insbesondere in engen Baupassagen, wie Gräben oder Ecken, besonders störend ist, und die damit verbundenen hohen Kosten von Nachteil. Zudem lässt sich ein solches Stampfersystem nicht auf herkömmliche Vibrationsstampfertypen übertragen bzw. nachrüsten. Die DE 297 07 017 U1 erfordert vielmehr einen völlig neuen konstruktiven Ansatz, so dass dieses Fahrwerk für gattungsgemäße Vibrationsstampfer uninteressant ist.

Aus dem Stand der Technik ist ferner bekannt, Haltebleche über die Befestigungsschrauben am Stampffuß des Vibrationsstampfers zu befestigen. Diese Haltebleche dienen zur Führung einer Achse mit zwei Rädern, wobei die Haltebleche jeweils vor einem Transportschritt am Vibrationsstampfer anmontiert und nach erfolgtem Transport wieder abmontiert werden. Nach der Anbringung der beiden Haltebleche wird der Vibrationsstampfer nach vorne gekippt (also in Fortbewegungsrichtung des Vibrationsstampfers) und die Achse mit den beiden endständigen Rädern unter die Haltebleche geschoben. Anschließend wird der Vibrationsstampfer nach hinten gekippt (also entgegen der Fortbewegungsrichtung des Vibrationsstampfers), so dass die Achse mit dem Gewicht des Vibrationsstampfers belastet wird. Ein weiteres Nachhintenkippen führt zu einer Anhebung des Fußes. Der Vibrationsstampfer ist nun ähnlich einer Sackkarre verfahrbar, wobei der Führungsbügel des Vibrationsdampfers der Führung des in die Achse eingehakten Vibrationsstampfers dient. Nachteilig an dieser Ausführungsform ist, dass ein erheblicher Zeitaufwand notwendig ist, um die Haltebleche am Fuß des Vibrationsstampfers anzubringen. Ferner besteht ein erhöhtes Unfallrisiko, da die Installationsarbeiten auf Grund widriger Umstände, fehlenden Werkzeugs, etc. häufig nur sehr nachlässig durchgeführt werden. Zudem ist der Bediener darauf angewiesen, kontinuierlich die Teile der Haltebleche, der Räder und der Radachse mit sich zu führen, inklusive entsprechenden Werkzeugs. Neben dem hohen Installationsaufwand hinsichtlich des An- und Abbaus besteht somit beim diesem System für die Bedienperson die Notwendigkeit, ein umfassendes Teilesortiment permanent mit sich zu führen. Erwartungsgemäß kommt es durch den Verlust oder Verschleiß von Teilen, unpassenden Werkzeugen oder ungünstigen Umbauumgebungen häufig zu einem Ausfall dieses Transportsystems, so dass der Bediener letztendlich auch einer erhöhten körperlichen Belastung ausgesetzt ist, da häufig auf die Unterstützung durch das Transportsystem verzichtet werden muss.

Es ist daher die Aufgabe der vorliegenden Erfindung, den Transport eines Vibrationsstampfers sicherer und gleichzeitig effizienter hinsichtlich Bedienungskomfort und Transportzeit zu gestalten.

Die Lösung der Aufgabe gelingt mit einer Transportvorrichtung gemäß dem unabhängigen Schutzanspruch. Bevorzugte Weiterbildungen sind in den abhängigen Schutzansprüchen angegeben.

Erfindungsgemäß weist die Transportvorrichtung eine Transportschaukel auf, die in Axialrichtung der Achse zwischen den beiden Rädern angeordnet ist, mit einer Stampffußaufnahme mit einem Stampffußumgriff, wobei der Stampffußumgriff in eine erste Transportierrichtung der Transportvorrichtung geöffnet ist, und mit einer Schaukelaufhängung mit einer Steuerkurve, welche eine Lade- und eine Transportstellung für die Achse in der Weise festlegt, dass durch Anheben der Transportschaukel die Achse die Steuerkurve wenigstens teilweise durchläuft. Die erfindungsgemäße Transportvorrichtung ermöglicht somit das Transportieren eines Vibrationsstampfers, ohne dass Umbauarbeiten im Vibrationsstampfer oder an der Transportvorrichtung durchgeführt werden müssen. Auf diese Weise ist es somit auch nicht mehr notwendig, Werkzeuge und Anbauteile vorrätig zu halten bzw. mitzuführen, um einen Vibrationsstampfer mit der erfindungsgemäßen Transportvorrichtung zu transportieren. Zudem ermöglicht die erfindungsgemäße Transportvorrichtung einen vom Vibrationsstampfertyp unabhängigen Transport, da die Transportvorrichtung am Vibrationsstampferfuß ansetzt, diesen in der Stampffußaufnahme aufnimmt, mit dem Stampffußumgriff in einem Teilbereich des Stampffußes umgreift und somit keinerlei zusätzliche Anbaueile oder feste Verbindung über beispielsweise Schraubverbindungen benötigt. Breit bereifte Räder ermöglichen zudem eine besonders vorteilhafte Geländegängigkeit. Unter einem Stampffußumgriff im Sinne der Erfindung ist eine Anordnung zu verstehen, die einen Teil der Fußplatte des Vibrationsstampfers klammerartig umgreift bzw. eine Teil der Fußunterseite, der Fußseitenfläche und der Fußoberseite umfasst. Dies ist beispielsweise vorzugsweise mit einem Profil mit U-förmigen Querschnitt möglich. Weiter kann der Stampffußumgriff aber auch mehrteilig sein und beispielsweise von mehreren hakenartigen Elementen gebildet werden.

Dabei ist es bevorzugt dass die Stampffußaufnahme ein Aufnahmeschuh ist, der zur formschlüssigen Stampffußaufnahme ausgebildet ist. Ein Aufnahmeschuh umgreift den Stampffuß somit nicht nur in einem Teilbereich entgegen der ersten Transporttierrichtung, sondern auch zu den Seiten des Vibrationsstampferfußes. Diese Ausführungsform ist gleich in mehrfacher Hinsicht von Vorteil. Einerseits ermöglicht ein Aufnahmeschuh die formschlüssige Aufnahme eines Teilbereiches des Vibrationsstampferfußes, wobei die Seite des Vibrationsstampferfußes entgegen der ersten Transportierrichtung vollständig und die beiden Seitenbereiche des Vibrationsstampferfußes wenigstens in einem Teilbereich von dem Aufnahmeschuh aufgenommen werden. Eine formschlüssige Aufnahme ist besonders sicher und stabil, so dass diese Ausführungsform erhebliche Bedienungsvorteile für den Bediener darstellt. Andererseits ist speziell ein Aufnahmeschuh zur variablen Aufnahme verschiedener Vibrationsstampferfüße geeignet. Auf diese Weise ist es somit besonders einfach, mit ein und derselben erfindungsgemäßen Transportiereinrichtung unterschiedliche Vibrationsstampfertypen bzw. Vibrationsstampfer mit unterschiedlichen Stampffüßen mit ein und derselben Transporteinrichtung zu transportieren.

Besonders vorteilhaft ist es, wenn die Steuerkurve derart ausgebildet ist, dass die Transportschaukel in einer zweiphasigen Bewegung relativ zur Achse von der Ladestellung in die Transportstellung bewegt wird, wobei einer anfänglichen Hubphase eine Gleitphase folgt. Bei diesem bevorzugten zweiphasigen Bewegungsablauf wird die Transportschaukel somit zunächst in Relation zur Achse angehoben. Diese Anhebeprozess geht vorzugsweise auf den Umgriff zurück, der, nachdem ein Teilbereich des Vibrationsstampferfußes umgriffen ist, die Transportschaukel in Relation zur Achse anhebt. Diese Bewegung wird beispielsweise durch eine Kippbewegung des Vibrationsstampfers in Vorwärtsbewegungsrichtung des Vibrationsstampfers hervorgerufen. Dem Anhebeprozess folgt eine Gleitphase, in der die Achse in die Transportstellung gleitet. Auch diese Bewegung kann von einer Kippbewegung des Vibrationsstampfers vermittelt werden. Zudem sind aber beispielsweise auch schwerkraftinduzierte Gleitbewegungen möglich.

Vorzugsweise ist die Transportschaukel an der Achse zweipunktgelagert, wobei die Stampffußaufnahme in Axialrichtung der Achse zwischen der ersten und der zweiten Lagerung angeordnet ist. Eine solche Lagerung der Transportschaukel zwischen zwei Schaukellagern, die die Transportschaukel mit der Achse verbinden, ist besonders stabil. Dies gilt insbesondere im Hinblick auf gefährliche Kippbewegungen oder seitliche Schwankungen des Vibrationsstampfers in der Transporteinrichtung. Dabei ist es besonders vorteilhaft, die beiden Lagerungspunkte möglichst weit voneinander zu beabstanden. Eine Anordnung, die in Axialrichtung des Achse zu beiden Seiten von jeweils einem Rad abgegrenzt wird, wobei an die beiden einander zugewandten Seiten der koaxial angeordneten Räder jeweils eine Schaukelaufhängung anschließt und zwischen den beiden Schaukelaufhängungen die Stampffußaufnahme angeordnet ist, hat sich hier als ganz besonders zuverlässig herausgestellt. Dazu weist die Schaukelaufhängung beispielsweise bevorzugt zwei Steuerplatten mit jeweils einer Steuerkurve auf.

Vorzugsweise begrenzen die das erste und das zweite Lager bildenden Elemente die Stampffußaufnahme in Axialrichtung der Achse. Durch die kombinierte Funktion dieser Elemente einerseits zur Lagerung und andererseits zur Stampffußbegrenzung ist eine geringere Bauteilanzahl zur Herstellung einer solchen Transportvorrichtung und entsprechend geringere Herstellungskosten erforderlich.

In einer besonders bevorzugten Ausführungsform ist die Steuerkurve ein zweischenkeliges Langloch, wobei die Achse in der Ladestellung im Bereich des ersten Schenkels und in der Transportierstellung im Bereich des zweiten Schenkels gelagert ist. Diese Ausführungsform zeichnet sich durch eine besonders hohe Betriebzuverlässigkeit und durch eine vergleichsweise preiswerte Herstellung aus. Der bevorzugte zweiphasige Bewegungsablauf der Transportschaukel wir bei dieser Ausführungsform durch die beiden Langlöcher festgelegt, wobei die erste Bewegungsphase im Wesentlichen dem ersten Langloch zuzuordnen ist und der zweite Bewegungsablauf im wesentlichen dem zweiten Langloch zuzuordnen ist. Vorzugsweise legen die einander abgewandten äußeren Eckpunkte der beiden Langlöcher entweder die Ladestellung (im Fall des ersten Schenkels) bzw. die Transportierstellung (im Falle des zweiten Schenkels) fest.

Besonders vorteilhaft ist dabei ein zweischenkeliges Langloch, welches im wesentlichen L-förmig ist. Bei einem L-förmigen Langloch gelingt die Trennung zwischen einer Hubphase und einer Gleitphase besonders gut. Durch ein L-förmiges Langloch ist zudem sichergestellt, dass erst nach der Überwindung eines Totpunktes im Bewegungsablauf von der Ladestellung in die Transportierstellung die Transportiereinrichtung in die Transportierstellung gleitet. Bei einem im wesentlichen L-förmigen Langloch liegt somit eine besonders scharfe Trennung zwischen der Hubbewegung und der Gleitbewegung vor. Der Totpunkt liegt dabei in dem Bereich des L-förmigen Langloches, in dem die beiden Schenkel aufeinander treffen. Für den Bediener hat diese Ausführungsform den Vorteil, dass die Transportvorrichtung einerseits bis zum Überschreiten des Totpunktes durch die im L-förmigen Langloch geführte Achse nicht ungewollt in die Transportierstellung umschaltet oder in einer "Halbstellung", also einer Stellung, die zwischen der Ladestellung und der Transportierstellung liegt und somit uneindeutig ist, verbleibt. Vielmehr ist bei einem L-förmigen Langloch festzustellen, dass diese entweder in Transportierstellung oder in Ladestellung verfährt, je nachdem, ob der Totpunkt bereits überwunden wurde oder nicht.

Bevorzugt stehen die zwei Schenkel in einem spitzen Winkel zueinander. Ein spitzer Winkel im Rahmen dieser Erfindung ist kleiner oder gleich 90°. Zwar ist auch die Verwendung stumpfer Winkel möglich, ein spitzer Winkel, insbesondere im Bereich von 90° bis 45° und ganz besonders im Bereich von 90° bis 75° zeichnet sich aber durch einen besonders weichen und zuverlässigen Bewegungsablauf der Transportschaukel von der Ladestellung in die Transportierstellung aus. Für den Bediener ergibt sich somit ein besonders hoher Bedienungskomfort.

In einer bevorzugten Weiterbildung weist das Langloch im Bereich des zweiten Schenkels wenigstens eine Ausbuchtung zum Sichern der Verfahrstellung der Achse während des Transportes auf. Durch diese Ausbuchtung wird die Achse an einem ungewollten "Zurückrutschen" im Langloch gehindert, was insbesondere bei sehr unebenem Gelände häufig beobachtet werden konnte. Außerdem wird darin die Achse abgestützt, wenn die Transporteinrichtung zusammen mit dem Vibrationsstampfer in die erste Transportrichtung geschoben wird. Diese Ausbuchtung im zweiten Schenkel erstreckt sich dabei im wesentlichen in die Richtung des Langlochs im ersten Schenkel bzw. weg von dem Untergrund, auf dem die Transporteinrichtung steht, und quer zur Transportrichtung. Im mit einem Vibrationsstampfer beladenem Zustand wird die Achse somit durch das Eigengewicht des Vibrationsstampfers in die Ausbuchtung gedrückt bzw. zur (im Regelfall während des Transportes ungewollten) Überwindung der Ausbuchtung im zweiten Schenkel muss somit zusätzlich das Eigengewicht des Vibrationsstampfers überwunden werden.

Besonders vorteilhaft ist es, wenn der erste Schenkel des zweischenkeligen Langloches derart ausgebildet ist, dass die Stampffußaufnahme in Ladestellung im wesentlichen überstandsfrei zum Außenumfang der Räder gelagert ist. Auf diese Weise ist gewährleistet, dass sich die Transportschaukel insbesondere während des Beladevorganges nicht in den Bodenuntergrund eingräbt bzw. Untergrundmaterial in die Transportschaukel aufgenommen wird. Dabei ist es im Hinblick auf eine besonders einfache Beladung von Vorteil, wenn die Stampffußaufnahme in Ladestellung nahezu bündig mit dem Außenumfang der Räder bzw. in der Weise mit dem Außenumfang der Räder abschließt, dass die Räder über die Stampffußaufnahme wenige Zentimeter, beispielsweise im Bereich von 0 bis 3 cm, idealerweise aber im Bereich von 0 bis 1,5 cm abschließen. Auf diese Weise ist einerseits eine zuverlässige Beladung möglich und andererseits trägt diese Anordnung insbesondere dem im Regelfall losen und mit kleineren Steinen versetzten Untergrund Rechnung.

Eine weitere bevorzugte Weiterbildung sieht vor, dass die Außenkante der Stampffußaufnahme in Transportierrichtung in Ladestellung der Transportschaukel in einem Abstand zur Achse ein einem Bereich zwischen 100 % und 90 % des Raddurchmessers und insbesondere in einem Bereich zwischen 98 % und 94 % des Raddurchmessers angeordnet ist. Auf diese Weise ist einerseits eine ausreichende Bodenfreiheit zur Positionierung der Ladevorrichtung gewährleistet. Andererseits ermöglicht der vergleichsweise geringe Abstand der Transportschaukel bzw. insbesondere der Stampffußaufnahme zum Untergrund eine erleichterte Aufnahme des Vibrationsstampfer in die Stampffußaufnahme, da der Vibrationsstampfer nicht angehoben werden muss.

Vorzugsweise ist die Außenkante der Stampffußaufnahme entgegen der Transportierrichtung in Transportsstellung (im Folgenden zum Teil auch Transportierstellung genannt) der Transportschaukel in einem Abstand zur Achse in einem Bereich zwischen 80 % und 50 % des Raddurchmessers und insbesondere in einem Bereich zwischen 70 % und 60 % des Raddurchmessers angeordnet. Durch diese Positionierung der Transportschaukel bzw. der Stampffußaufnahme ergibt sich eine erheblich Bodenfreiheit zwischen dem Untergrund, auf dem die Transportvorrichtung bewegt wird, und dem orthogonal zum Untergrund "tiefsten" Punkt der Transportvorrichtung. Eine große Bodenfreiheit erleichtert es dem Bediener, die mit einem Vibrationsstampfer beladene Transportvorrichtung durch unebenes Gelände zu dirigieren, da auf diese Weise gewährleistet ist, dass Steine oder ähnliches einfach überrollte werden können und die Transportvorrichtung nicht an solchen kleineren Hindernissen hängen bleibt.

Eine weitere vorteilhafte Ausführungsform weist einen Stampffußumgriff mit einer Gabel mit zwei Greifarmen auf. Eine gabelartige Ausführung des Stampffußumgriffs ermöglicht besonders gut eine hohe Variabilität der erfindungsgemäßen Transportvorrichtung hinsichtlich unterschiedlicher Vibrationsstampfertypen bzw. unterschiedlicher Stampffüße mit variierenden Arbeitsbreiten. Ein solcher Stampffußumgriff umgreift somit nicht nur einen Teilbereich im hinteren Bereich (relativ zur Fortbewegungsgeschwindigkeit des Vibrationsstampfers) des Stampffußes, sondern umgreift ferner mit den beiden Gabelarmen einen Teilbereich des Verbindungsteiles zwischen dem Stampffuß und der Obermasse. Diese Umgreifen stabilisiert den Vibrationsstampfer ganz besonders effektiv gegenüber seitlichen Bewegungen parallel zur Achse. Dies können beispielsweise Rollbewegungen des Vibrationsstampfers sein.

Aus produktionstechnischen Gesichtspunkten ist es von Vorteil, wenn die Transportschaukel einteilig ausgebildet ist und durch ein Biegeverfahren geformt ist. Auf diese Weise ist es möglich, einen Transportscfiaukelrohling aus einem planen Metallteil herauszuschneiden und durch ein anschließendes Biegeverfahren in die gewünschte Form zu bringen. Die Anzahl der zur Herstellung benötigten Teile und Arbeitsschritte wird somit erheblich reduziert, womit eine erfindungsgemäße Transportvorrichtung besonders preiswert herstellbar ist.

Nachfolgend wird die Erfindung anhand der in den Figuren dargestellten Ausführungsbeispiele weiter erläutert. Darin zeigen schematisch:
Fig. 1: Ein perspektivische Seitenansicht einer Transportschaukel von schräg hinten in Ladestellung;
Fig. 2: eine perspektivische Seitenansicht einer Transportvorrichtung von schräg vorne in Ladestellung;
Fig. 3: eine zur Achse koaxiale Seitenansicht auf die Transportschaukel aus Fig. 2;
Fig. 4: eine Draufsicht auf die Transportschaukel aus Fig. 2;
Fig. 5: eine Frontalansicht auf die Transportschaukel aus Fig. 2;
Fig. 6: eine perspektivische Seitenansicht von schräg hinten auf eine Transportvorrichtung in Ladestellung mit Vibrationsstampfer;
Fig. 7: eine Seitenansicht auf eine Transportvorrichtung in Ladestellung mit Vibrationsstampfer, wobei ein Rad abmontiert ist;
Fig. 8: eine perspektivische Seitenansicht von schräg hinten auf eine Transportvorrichtung in Transportierstellung mit Vibrationsstampfer; und
Fig. 9: eine Seitenansicht auf eine Transportvorrichtung in Transportstellung mit Vibrationsstampfer, wobei ein Rad abmontiert ist.

Bei den im Folgenden dargestellten Ausführungsformen sind gleiche Bauteile mit gleichen Bezugszeichen versehen. Der Übersichtlichkeit halber sind sich in den Figuren wiederholende Bauteile nicht in jeder Figur einzeln bezeichnet.

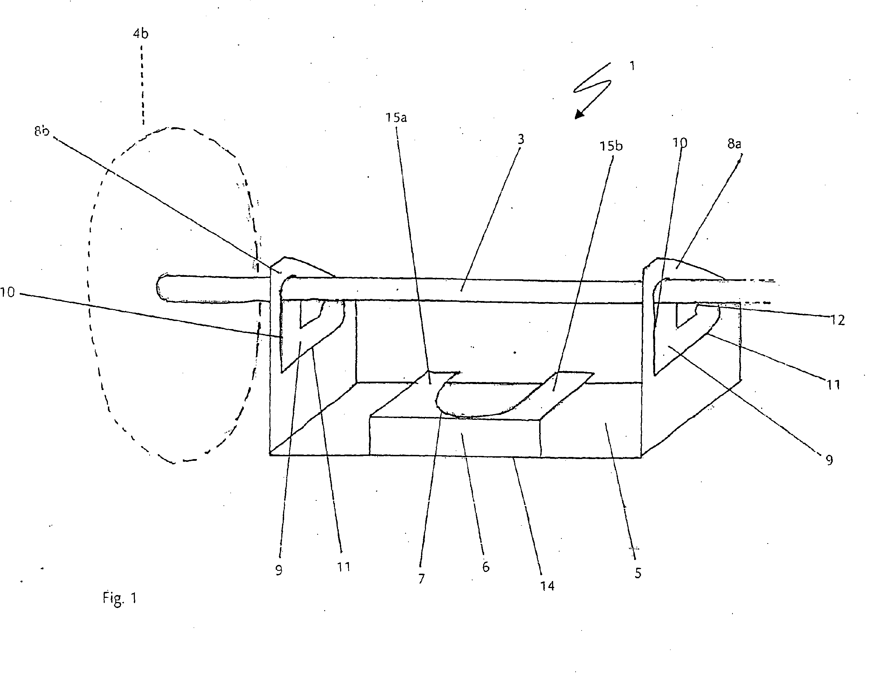

Fig. 1 zeigt einen Teilbereich einer ersten Ausführungsform einer Transportsvorrichtung (1) mit einer Achse (3) (diese ist zur rechten Figurenseite hin nur angedeutet und nicht vollständig dargestellt), Rädern (4b; der Übersichtlichkeit halber ist nur ein Rad mit einer gestrichelten Linie angedeutet), einer Transportschaukel (5), einer Stampffußaufnahme (6), einem Stampffußumgriff (7) mit einer Gabel aus zwei Gabelarmen (15a/15b), einer Außenkante (13) in Richtung einer zweiten Transportierrichtung (C') und mit einer Zweipunktschaukelaufhängung (8a/8b), wobei jedes der Aufhängungselemente (8a und 8b) jeweils ein als Steuerkurve dienendes Langloch (9) aufweist. Jedes der Langlöcher (9) weist einen ersten Schenkel (10), einen zweiten Schenkel (11) und eine sich nach oben erstreckende Ausbuchtung (12) am Ende des zweiten Schenkels (11) auf.

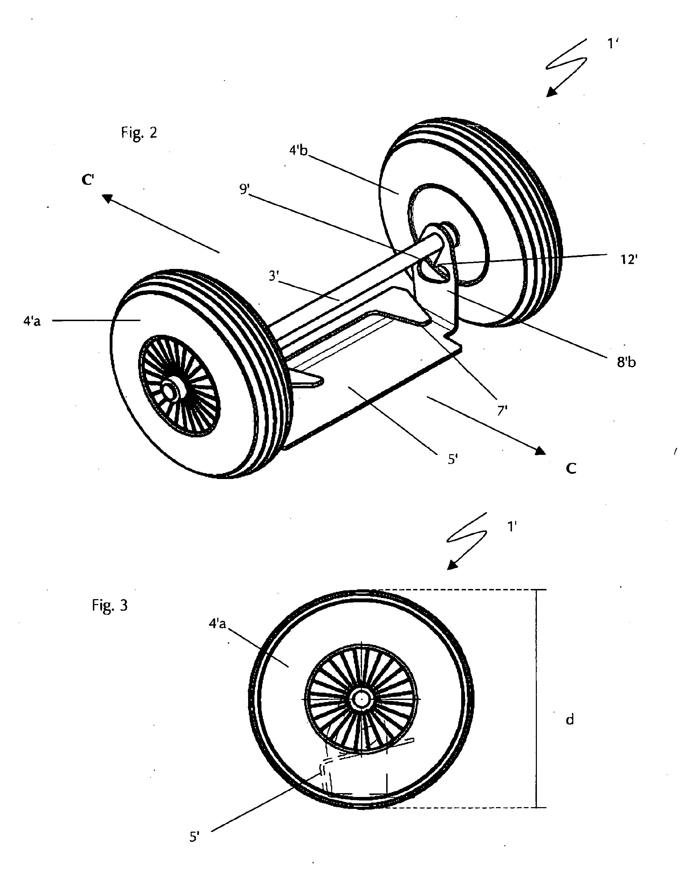

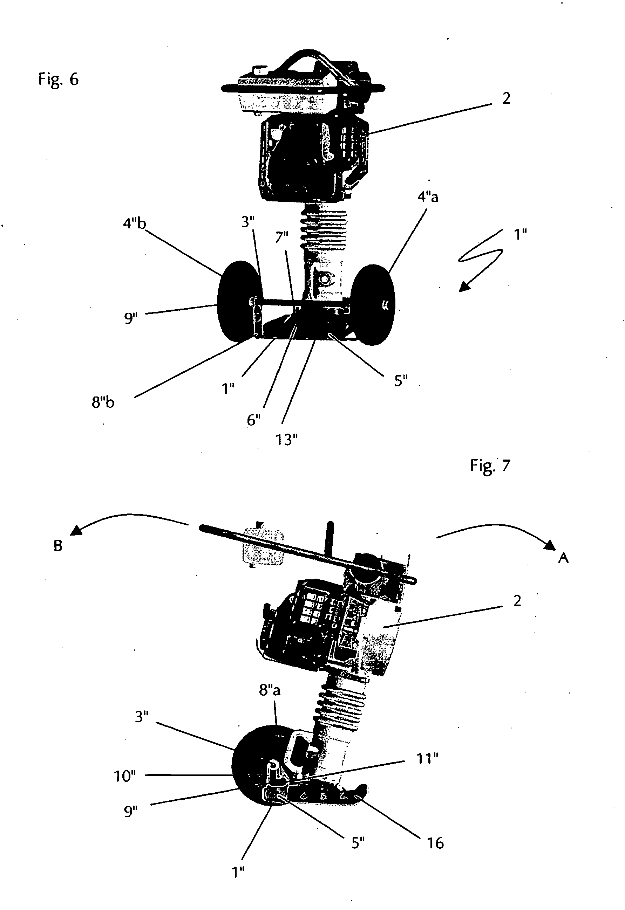

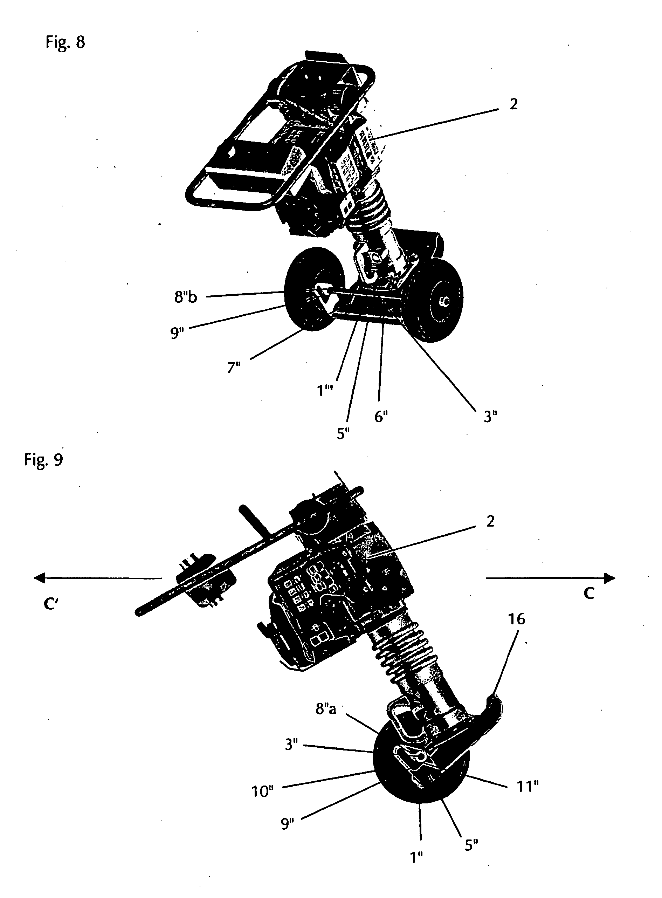

Eine vollständige Transportvorrichtung (1') in Ladestellung mit auf der Achse (3') sitzenden Rädern (4'a/4'b) geht aus den Figuren 2, 3, 4 und 5 hervor. Die Pfeile C, C' in den Figuren 2, 4 und 9 geben dabei die erste (C) bzw. zweite (C') Transportierrichtung der Transportvorrichtung (1') (bzw. in Fig. 9 Transportvorrichtung 1 ") an, wenn diese mit einem Vibrationsstampfer (in den Figuren 2 bis 5 nicht dargestellt) beladen ist. Die erste Transportierrichtung C ist dabei entgegengesetzt zu der Richtung, in welche der Führungsbügel des Vibrationsstampfers (2) (Fig. 6, 7, 8, 9) zeigt. Die Richtung, in welche das freie Ende des Führungsbügels weist, ist die zweite Transportierrichtung C'.

Figuren 2, 3, 4 und 5 veranschaulichen besonders deutlich das Lageverhältnis der Achse (3') und des Stampffußumgriffes (7'). Die Transportschaukel (5') bzw. die Langlöcher (9') sind dabei so angelegt, dass die Einrichtungen der Stampffußaufnahme (6') umfassend den Stampffußumgriff (7') und die Gabelarme (15'a und 15'b) sowohl in Lagestellung als auch in Transportierstellung kontaktfrei gegenüber der Achse (3') sind. Somit ist gewährleistet, dass sich die Achse (3') und die Transportschaukel (5') in ihrer zueinander relativen Beweglichkeit nicht beeinträchtigen. Im Verhältnis zum dem Untergrund, auf dem die Transporteinrichtung (1') positioniert ist, verläuft die Achse (3') im vorliegenden Ausführungsbeispiels oberhalb des Stampffußumgriffs (7').

In Figur 3 ist die Transportschaukel (5') in gestrichelten Linien angedeutet, da sie durch die seitliche Ansicht von dem in Axialrichtung vorgelagerten Rad (4'a) verdeckt ist. Die Transportschaukel (5') und insbesondere die Außenkante (13') der Transportschaukel (5') in der zweiten Transportrichtung (C') ist in Ihren Dimensionierungen derart ausgelegt, dass sie in Axialrichtung der Achse (3') vollständig vom Rad (4'a) verdeckt wird bzw. überstandfrei in Relation zum Außendurchmesser (d) der Räder (4'a/4'b) in der Transporteinrichtung (1') gelagert ist. Wesentlich ist dazu insbesondere die Formgebung der Langlöcher (9') in den Schaukelaufhängungen (8'a/8'b) und der Ausbuchtung (12'). Ferner laufen das Oberteil und das Unterteil der Stampffußaufnahme (6') zumindest im einem Teilbereich entgegen der ersten Transportierrichtung (also in Richtung C') trichterförmig aufeinander zu, so dass die Einfädelung des Vibrationsstampferfußes (nicht dargestellt) in die Transportschaukel (5') besonders unproblematisch ist. Dabei ist die Transportschaukel (5') gegenüber der Achse (3') derart gewichtsmäßig ausbalanciert, dass die dem Untergrund zugewandte (untere) Fläche der Stampffußaufnahme (6') parallel zum Untergrund verläuft. Der Vollständigkeit halber sei an dieser Stelle jedoch vermerkt, dass gleichermaßen eine relativ zum Untergrund geneigte, rampenartige Ausbalancierung möglich ist, die eine erleichterte Beladung der Transportvorrichtung (1') ermöglicht.

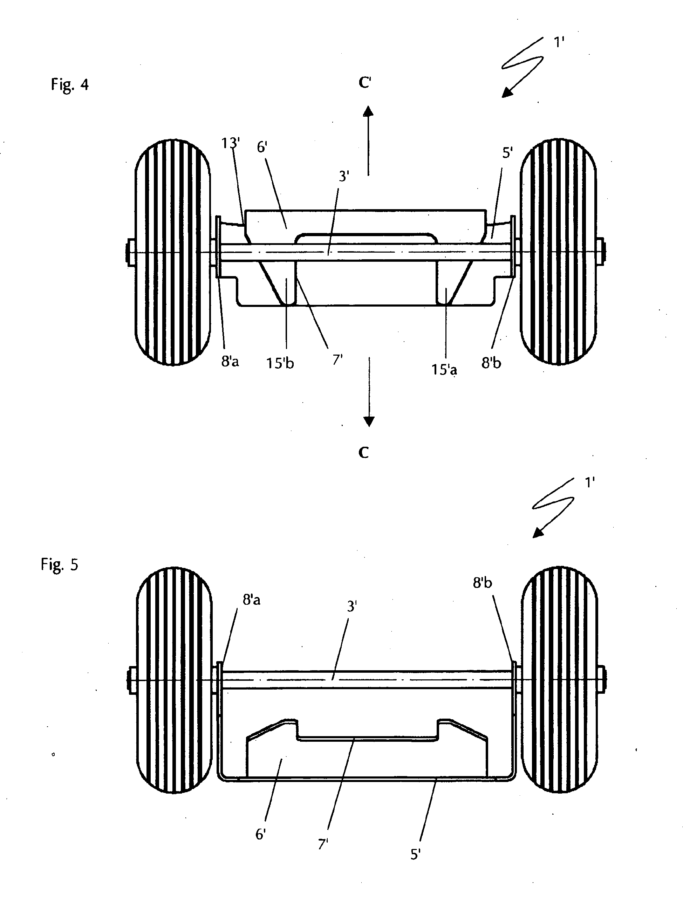

Die Figuren 4 und 5 verdeutlichen die Positionierung der Achse (3') über der Stampffußaufnahme (6') in Relation zum Untergrund. Die Stampffußaufnahme (6') ist über die Schaukelaufhängungen (8'a/8'b) an die Achse (3') gehängt. In der Draufsicht aus Fig. 4 wird ferner deutlich, dass der Stampffußumgriff (7') mit den beiden Gabelarmen (15'a/15'b) gemeinsam zu drei Seiten einen quaderförmige Raum umgibt. Das Zusammenspiel dieser drei Begrenzungen des Stampffußumgriffs (7') ermöglicht eine stabile Lagerung des Vibrationsstampfers, da der Vibrationsstampferfuß (nicht dargestellt) einerseits nicht entgegen der in Fig. 4 angegebenen ersten Transportierrichtung (C) (also in Richtung C') verschoben werden kann, da der Vibrationsstampferfuß in diese Richtung gegen einen Wandbereich des Stampffußumgriffs (7') anschlagen wird. Andererseits ist eine Seitenbewegung des Vibrationsstampfers in Axialrichtung der Achse (3') durch die von den Gabelarmen (15'a/15'b) gebildeten Teilbereiche des Stampffußumgriffs (7') begrenzt, da die vom Vibrationsstampffuß ausgehenden und durch die von den Gabelarmen (15'a/15'b) und einem Teilbereich des Stampffußumgriffs (7') gebildete Aussparung hindurchragende Bauteile des Vibrationsstampfers in diesem Fall gegen die diesen Bauteilen zugewandten Anschläge der Gabelarme (15'a/15'b) anschlagen und somit auch in ihrer Seitenbewegungsfreiheit begrenzt werden.

Die Figuren 6, 7, 8 und 9 veranschaulichen einen Beladungsvorgang einer Transportvorrichtung (1") mit einem Vibrationsstampfer (2). Die Figuren 6 und 7 betreffen dabei die Transportvorrichtung (1") in Ladestellung, wohingegen aus den Figuren 8 und 9 die beladenen Transportvorrichtung (1") in Transportierstellung hervorgeht. Die Figuren 7 und 9 sind dabei Schnittansichten, wobei die Achse (3") zwischen dem in der ersten Transportierrichtung (Pfeil C in Figur 9) rechten Rad (4"a) und der Schaukelaufhängung (8"a) geschnitten ist. Das jeweils in der ersten Transportierrichtung (C) rechte Rad (4"a) der Transportvorrichtung (1") ist somit in den Figuren 7 und 9 nicht sichtbar. In den Figuren 6 bis 9 ist ferner der Stampffuß (16) mit seinem in Relation zur Fortbewegungsrichtung des Vibrationsstampfers (2) hinteren Fußende in die Stampffußaufnahme (6") der Transportvorrichtung (1 ") eingeführt. Auf diese Weise ist der Vibrationsstampfer (2) in seiner aufrechten Position stabil, da die Transporteinrichtung (1 ") den Vibrationsstampfer (2) zusätzlich stabilisiert.

Zum Transportieren eines Vibrationsstampfers (2) mit der Transportiervorrichtung (1 ") lassen sich im Wesentlichen drei zentrale Bewegungsabläufe unterscheiden, nachdem die Transporteinrichtung (1 ") mit der Stampffußaufnahme (6") über das hintere Fußende des Stampffußes (16) gestülpt wurde.

In einer ersten Phase wird ausgehend von der in den Figuren 6 und 7 veranschaulichten Situation der Vibrationsstampfer (2) in Fortbewegungsrichtung des Vibrationsstampfers (2) in Richtung des Pfeils A nach vorne gekippt. Dies ist beispielsweise durch ein Anheben des Führungsbügels möglich. Der Stampffußumgriff (7") liegt somit einem Teilbereich der Oberseite des Stampffußes (16) auf, so dass bei einer Fortsetzung der Kippbewegung in Richtung des Pfeils A die Transportschaukel (5") angehoben wird. Entsprechend gleitet die Achse (3") in den Langlöchern (9") von der Lagestellung im ersten Schenkel (10") hin zu dem Punkt, in dem der erste Schenkel (10") auf den zweiten Schenkel (11") trifft. Wird die Bewegung fortgesetzt, gleitet die Achse anschließend entlang der durch den zweiten Langlochschenkel (11 ") gebildeten Steuerkurve in Richtung der Transportierposition über den Totpunkt hinweg. Dabei wird die Kippbewegung in Richtung des Pfeils A solange fortgesetzt, bis die Räder (4"a und 4"b) leicht angehoben werden. Auf diese Weise ist gewährleistet, dass die Achse (3") in Transportierposition ist. Der Kipphebel wird dabei durch den Vibrationsstampfer 2 bzw. des Handgriff gebildet, der als eine Art Deichsel fungiert.

Nun wird der Vibrationsstampfer 2 entgegen der Richtung des Pfeils A in Richtung des Pfeils B gekippt. Die leicht angehobene Achse (3") schlägt dadurch gegen die Ausbuchtung (12") im zweiten Schenkel (11") des Langlochs (9") an und gleitet entsprechend nicht in Richtung des ersten Langlochschenkels (10") zurück. Durch dieses Einhaken der Achse (3") im zweiten Schenkel (11") wird es somit möglich, dass der Vibrationsstampfer in Relation zum Untergrund durch die Kippbewegung in Richtung des Pfeils B angehoben wird, da die Achse (3") in dieser Position in dem Stampffuß (16) näher liegender Lage ist. Die Kippbewegung in Richtung des Pfeils B hat somit zur Folge, dass die Achse (3") in der Ausbuchtung (12") festliegt, der Vibrationsstampfer (2) angehoben wird und die Gesamtlast auf den Rädern lastet. Je nachdem, wie die Ausbuchtung (12") bzw. der zweite Schenkel (11") somit ausgestaltet werden, lässt sich die Bodenfreiheit, also der Raum zwischen dem Untergrund und der dem Untergrund zugewandten Außenkante der Transportschaukel (5") herstellerseitig einstellen.

Nachdem die Einheit aus Vibrationsstampfer (2) und Transportvorrichtung (1 ") in die Transportstellung der Figuren 8 und 9 gekippt wurde, wird zum Verfahren dieser Einheit wahlweise in Richtung des Pfeils C (erste Transportierrichtung) in Figur 9 gedrückt bzw. geschoben oder entgegengesetzt in Richtung des Pfeils C' (zweite Transportierrichtung) gezogen. Insbesondere Figur 9 verdeutlicht die sackkarrenartige Gesamterscheinung der Vibrationsstampfer-Transportvorrichtungs-Einheit. Zum Transportieren des Vibrationsstampfers (2) sind somit keinerlei Umbauarbeiten, Spezialwerkzeuge oder sonstige Sondermaßnahmen notwendig. Der Vibrationsstampfer (2) wird durch die Kippbewegungen vielmehr aufgebockt und kann anschließend problemlos an eine andere Stelle geschoben werden. Während des Transports ruht dabei die Achse (3") in den beiden Ausbuchtungen (12") der zweiten Langlochschenkel (11").

## Patentansprüche

1. Transportvorrichtung (1/1'/1") zum Transportieren eines Vibrationsstampfers (2), wobei die Transportvorrichtung (1/1'/1") eine Achse (3/3'/3") aufweist, an deren Enden jeweils ein Rad (4a/4b; 4'a/4'b; 4"a/4"b) angeordnet ist,
**dadurch gekennzeichnet,**
**dass** die Transportvorrichtung (1/1'/1") eine Transportschaukel (5/5'/5") aufweist, die in Axialrichtung der Achse (3/3'/3") zwischen den beiden Rädern (4a/4b; 4'a/4'b; 4"a/4"b) angeordnet ist, mit einer Stampffußaufnahme (6/6'/6") mit einem Stampffußumgriff (7/7'/7"), wobei der Stampffußumgriff (7/7'/7") in einer ersten Transportierrichtung der Transportvorrichtung (1/1'/1") geöffnet ist, und mit einer Schaukelaufhängung (8a/8b; 8'a/8'b; 8"a/8"b) mit einer Steuerkurve, welche eine Lade- und eine Transportierstellung für die Achse (3/3'/3") in der Weise festlegt, dass durch Anheben der Transportschaukel (5/5'/5") die Achse (3/3'/3") die Steuerkurve wenigstens teilweise durchläuft.

2. Transportvorrichtung (1/1'/1") nach dem vorhergehenden Anspruch,
**dadurch gekennzeichnet,**
**dass** die Stampffußaufnahme (6/6'/6") ein Aufnahmeschuh ist, der zur formschlüssigen Stampffußaufnahme ausgebildet ist.

3. Transportvorrichtung (1/1'/1") nach einem der vorhergehenden Ansprüche,
**dadurch gekennzeichnet,**
**dass** die Steuerkurve derart ausgebildet ist, dass die Transportschaukel (5/5'/5") in einer zweiphasigen Bewegung relativ zur Achse (3/3'/3") von der Ladestellung in die Transportierstellung bewegbar wird, wobei einer anfänglichen Hubphase eine Gleitphase folgt.

4. Transportvorrichtung (1/1'/1") nach einem der vorhergehenden Ansprüche,
**dadurch gekennzeichnet,**
**dass** die Transportschaukel (5/5'/5") an der Achse (3/3'/3") zweipunktgelagert ist, wobei die Stampffußaufnahme (6/6'/6") in Axialrichtung der Achse (3/3'/3"), zwischen der ersten und der zweiten Lagerung angeordnet ist.

5. Transportvorrichtung (1/1'/1") nach Anspruch 4,
**dadurch gekennzeichnet,**
**dass** die das erste und das zweite Lager bildenden Elemente (8a/8b; 8'a/8'b; 8"a/8"b) die Stampffußaufnahme (6/6'/6") in Axialrichtung der Achse (3/3'/3") zu beiden Seiten der Achse (3/3'/3") begrenzen.

6. Transportvorrichtung (1/1'/1") nach einem der vorhergehenden Ansprüche,
**dadurch gekennzeichnet,**
**dass** die Steuerkurve ein zweischenkeliges Langloch (9/9'/9") ist, wobei die Achse (3/3'/3") in der Ladestellung im Bereich des ersten Schenkels (10/10'/10") und in der Transportierstellung im Bereich des zweiten Schenkels (11/11'/11") gelagert ist.

7. Transportvorrichtung (1/1'/1") nach dem Anspruch 6,
**dadurch gekennzeichnet,**
**dass** das zweischenketige Langloch (9/9'/9") im Wesentlichen L-förmig ist.

8. Transportvorrichtung (1/1'/1") nach einem der Ansprüche 6 oder 7,
**dadurch gekennzeichnet,**
**dass** die zwei Schenkel (10/11; 10'/11'; 10"/11") in einem spitzen Winkel zueinander stehen.

9. Transportvorrichtung (1/1'/1") nach einem der Ansprüche 6 bis 8,
**dadurch gekennzeichnet,**
**dass** das Langloch (9/9'/9") im Bereich des zweiten Schenkels (11/11'/11") wenigstens eine Ausbuchtung (12/12'/12") zum Sichern der Verfahrstellung der Achse (3/3'/3") während des Transportes aufweist.

10. Transportvorrichtung (1/1'/1") nach einem der Ansprüche 6 bis 9,
**dadurch gekennzeichnet,**
**dass** der erste Schenkel (10/10'10") derart ausgebildet ist, dass die Stampffußaufnahme (6/6'/6") in Ladestellung im Wesentlichen überstandsfrei zum Außenumfang der Räder (4a/4b; 4'a/4'b; 4"a/4"b) gelagert ist.

11. Transportvorrichtung (1/1'/1") nach einem der vorhergehenden Ansprüche,
**dadurch gekennzeichnet,**
**dass** die Außenkante (13/13'/13") der Stampffußaufnahme (6/6'/6") in Transportierrichtung in Ladestellung der Transportschaukel (5/5'/5") in einem Abstand zur Achse (3/3'/3") in einem Bereich zwischen 100 % und 90 % des Raddurchmessers (d) und insbesondere in einem Bereich zwischen 98 % und 94 % des Raddurchmessers (d) angeordnet ist.

12. Transportvorrichtung (1/1'/1") nach einem der vorhergehenden Ansprüche,
**dadurch gekennzeichnet,**
**dass** die Außenkante (13/13'/13") der Stampffußaufnahme (6/6'/6") entgegen der Transportierrichtung in Transportsstellung der Transportschaukel (5/5'/5") in einem Abstand zur Achse (3/3'/3") in einem Bereich zwischen 80 % und 50 % des Raddurchmessers (d) und insbesondere in einem Bereich zwischen 70 % und 60 % des Raddurchmessers (d) liegt.

13. Transportvorrichtung (1/1'/1") nach einem der vorhergehenden Ansprüche,
**dadurch gekennzeichnet,**
**dass** der Stampffußumgriff (7/7'/7") eine Gabel (15/15'/15") mit zwei Greifarmen (15a/15b; 15'a/15'b; 15"a/15"b) aufweist.

14. Transportvorrichtung (1/1'/1") nach einem der vorhergehenden Ansprüche,
**dadurch gekennzeichnet,**
**dass** die Transportschaukel (5/5'/5") einteilig ausgebildet ist und durch ein Biegeverfahren geformt ist.

## Claims

1. A transport apparatus (1/1'/1") for transporting a vibratory tamper (2), the transport apparatus (1/1'/1") comprising an axle (3/3'/3") with a wheel (4a/4b; 4'a/4'b; 4"a/4"b) arranged at each end, **characterized in that** the transport apparatus (1/1'/1") comprises a transport swing (5/5'/5") arranged between the two wheels (4a/4b; 4'a/4'b; 4"a/4"b) in the axial direction of the axle (3/3'/3"), comprising a tamper foot support (6/6'/6") with a tamper foot wrap-around mount (7/7'/7"), the tamper foot wrap-around mount (7/7'/7") being open in a first direction of travel of the transport apparatus (1/1'/1"), and comprising a swing suspension (8a/8b; 8'a/8'b; 8"a/8"b) with a control curve that determines a loading and transport position for the axle (3/3'/3") so that the axle (3/3'/3") at least partly runs through the control curve by means of the raising of the transport swing (5/5'/5").

2. A transport apparatus (1/1'/1") according to the preceding claim, **characterized in that** the tamper foot support (6/6'/6") is a receiving saddle adapted to support the tamper foot in an interlocking manner.

3. A transport apparatus (1/1'/1") according to one of the preceding claims, **characterized in that** the control curve is adapted so that the transport swing (5/5'/5") is movable in a two-phase movement relative to the axle (3/3'/3") from the loading position into the transport position, wherein a sliding phase follows an initial lifting phase.

4. A transport apparatus (1/1'/1") according to one of the preceding claims, **characterized in that** the axle (3/3'/3") bears the transport swing (5/5'/5") at two points, the tamper foot support (6/6'/6") being arranged between the first and second bearings in the axial direction of the axle (3/3'/3").

5. A transport apparatus (1/1'/1") according to claim 4, **characterized in that** the elements (8a/8b; 8'a/8'b; 8"a/8"b) that form the first and second bearings border the tamper foot support (6/6'/6") on both sides of the axle (3/3'/3") in the axial direction of the axle (3/3'/3").

6. A transport apparatus (1/1'/1") according to one of the preceding claims, **characterized in that** the control curve is a two-arm oblong opening (9/9'/9"), the axle (3/3'/3") being held in the loading position in the region of the first arm (10/10'/10") and in the transport position in the region of the second arm (11/11'/11 ").

7. A transport apparatus (1/1'/1") according to claim 6, **characterized in that** the two-arm oblong opening (9/9'/9") is essentially L-shaped.

8. A transport apparatus (1/1'/1") according to one of claims 6 or 7, **characterized in that** the two arms (10/11; 10'/11'; 10"/11") are positioned at an acute angle relative to one other.

9. A transport apparatus (1/1'/1") according to one of claims 6 to 8, **characterized in that** the oblong opening (9/9'/9") is provided with at least one protrusion (12/12'/12") in the region of the second arm (11/11'/11") for securing the displacement position of the axle (3/3'/3") during transport.

10. A transport apparatus (1/1'/1") according to one of claims 6 to 9, **characterized in that** the first arm (10/10'/10") is adapted so that the tamper foot support (6/6'/6") is held in the loading position in an essentially non-protruding manner with respect to the outer periphery of the wheels (4a/4b; 4'a/4'b; 4"a/4"b).

11. A transport apparatus (1/1'/1") according to one of the preceding claims, **characterized in that** the outer edge (13/13'/13") of the tamper foot support (6/6'/6") is arranged in the direction of travel in the loading position of the transport swing (5/5'/5") at a distance from the axle (3/3'/3") in the range of between 100% and 90% of the wheel diameter (d) and in particular in the range of between 98% and 94% of the wheel diameter (d).

12. A transport apparatus (1/1'/1") according to one of the preceding claims, **characterized in that** the outer edge (13/13'/13") of the tamper foot support (6/6'/6") is arranged in a direction opposite to the direction of travel in the transport position of the transport swing (5/5'/5") at a distance from the axle (3/3'/3") in the range of between 80% and 50% of the wheel diameter (d) and in particular in the range of between 70% and 60% of the wheel diameter (d).

13. A transport apparatus (1/1'/1") according to one of the preceding claims, **characterized in that** the tamper foot wrap-around mount (7/7'/7") comprises a bracket (15/15'/15") with two clamping arms (15a/15b; 15'a/15'b; 15"a/15"b).

14. A transport apparatus (1/1'/1") according to one of the preceding claims, **characterized in that** the transport swing (5/5'/5") is adapted as a single-piece and is formed by means of a bending process.

## Revendications

1. Dispositif de transport (1/1'/1") pour le transport d'une dameuse vibrante (2), lequel dispositif de transport (1/1'/1") possède un essieu (3/3'/3") dont chaque extrémité porte une roue (4a/4b ; 4'a/4'b ; 4"a/4"b), **caractérisé en ce que** le dispositif de transport (1/1'/1") présente une bascule de transport (5/5'/5") qui est disposée dans le sens axial de l'essieu (3/3'/3") entre les deux roues (4a/4b ; 4'a/4'b ; 4"a/4"b), avec un berceau pour dameuse (6/6'/6") avec un logement de dameuse (7/7'/7"), lequel logement de dameuse (7/7'/7") est ouvert dans une première direction de transport du dispositif de transport (1/1'/1"), et avec une suspension de bascule (8a/8b ; 8'a/8'b ; 8"a/8"b) avec une courbe de guidage qui fixe une position de chargement et une position de transport pour l'essieu (3/3'/3") de telle manière que le levage de la bascule de transport (5/5'/5") fasse passer l'essieu (3/3'/3") au moins sur une partie de la courbe de guidage.

2. Dispositif de transport (1/1'/1") selon la revendication précédente, **caractérisé en ce que** le berceau de dameuse (6/6'/6") est un sabot de réception qui est conformé pour recevoir la dameuse en correspondance de forme.

3. Dispositif de transport (1/1'/1") selon l'une des revendications précédentes, **caractérisé en ce que** la courbe de guidage est conformée de telle façon que la bascule de transport (5/5'/5") puisse être amenée de la position de chargement à la position de transport dans un mouvement en deux phases par rapport à l'essieu (3/3'/3"), une phase de levage initiale étant suivie d'une phase de glissement.

4. Dispositif de transport (1/1'/1") selon l'une des revendications précédentes, **caractérisé en ce que** la bascule de transport (5/5'/5") est supportée en deux points sur l'essieu (3/3'/3"), le berceau de dameuse (6/6'/6") étant disposé dans le sens axial de l'essieu (3/3'/3") entre le premier appui et le deuxième.

5. Dispositif de transport (1/1'/1") selon la revendication 4, **caractérisé en ce que** les éléments formant le premier appui et le deuxième (8a/8b ; 8'a,/8'b ; 8"a/8"b) délimitent le berceau de dameuse (6/6'/6") dans le sens axial de l'essieu (3/3'/3") vers les deux côtés de l'essieu (3/3'/3").

6. Dispositif de transport (1/1'/1") selon l'une des revendications précédentes, **caractérisé en ce que** la courbe de guidage est un trou oblong à deux branches (9/9'/9"), l'essieu (3/3'/3") étant supporté dans la région de la première branche (10/10'/10") dans la position de chargement et dans la région de la deuxième branche (11/11'/11") dans la position de transport.

7. Dispositif de transport (1/1'/1") selon la revendication 6, **caractérisé en ce que** le trou oblong à deux branches (9/9'/9") est sensiblement en forme de L.

8. Dispositif de transport (1/1'/1") selon l'une des revendications 6 ou 7, **caractérisé en ce que** les deux branches (10/11 ; 101'/11'; 10"/11") forment un angle aigu l'une par rapport à l'autre.

9. Dispositif de transport (1/1'/1") selon l'une des revendications 6 à 8, **caractérisé en ce que** le trou oblong (9/9'/9") présente au niveau de la deuxième branche (11/11'/11") au moins un creux (12/12'/12") pour fixer la position de déplacement de l'essieu (3/3'/3") pendant le transport.

10. Dispositif de transport (1/1'/1") selon l'une des revendications 6 à 9, **caractérisé en ce que** la première branche (10/10'/10") est conformée de telle façon que le berceau de dameuse (6/6'/6") soit supporté dans la position de chargement sensiblement sans débordement vers la circonférence extérieure des roues (4a/4b ; 4'a/4'b ; 4"a/4"b).

11. Dispositif de transport (1/1'/1") selon l'une des revendications précédentes, **caractérisé en ce que** le bord extérieur (13/13'/13") du berceau de dameuse (6/6'/6") est disposé, dans la position de chargement de la bascule de transport (5/5'/5"), à une distance dans le sens du transport par rapport à l'essieu (3/3'/3") comprise entre 100 % et 90 % du diamètre (d) des roues et en particulier entre 98 % et 94 % du diamètre (d) des roues.

12. Dispositif de transport (1/1'/1") selon la revendication précédentes, **caractérisé en ce que** le bord extérieure (13/13'/13") du berceau de dameuse (6/6'/6") se trouve, dans la position de transport de la bascule de transport (5/5'/5"), à une distance en sens inverse du sens de transport de l'essieu (3/3'/3") comprise entre 80 % et 50 % du diamètre (d) des roues et en particulier entre 70 % et 60 % du diamètre (d) des roues.

13. Dispositif de transport (1/1'/1") selon l'une des revendications précédentes, **caractérisé en ce que** le logement de dameuse (7/7'/7") présente une fourche (15/15'/15") avec deux bras de préhension (15a/15b ; 15'a/15'b; 15"a/15"b).

14. Dispositif de transport (1/1'/1") selon l'une des revendications précédentes, **caractérisé en ce que** la bascule de transport (5/5'/5") est construite d'un seul tenant et mise en forme par un procédé de cintrage.
